# EUROPÄISCHE PATENTANMELDUNG

(11) **EP 3 235 936 A1**
(43) Veröffentlichungstag der Anmeldung: **25.10.2017**
(21) Anmeldenummer: 16165917.2
(22) Anmeldetag: 19.04.2016
(51) Int. Cl.: D04H 1/58, B29B 11/00, B29C 70/00, B29C 51/00, D04H 1/64

(54) **VERFAHREN ZUR HERSTELLUNG EINES MISCHFASER-FLÄCHENGEBILDES SOWIE FLÄCHENGEBILDE**

(71) Anmelder: Maucher Formenbau GmbH & Co. KG, 88046 Friedrichshafen (DE)
(72) Erfinder: Strittmatter, Peter, 88046 Friedrichshafen (DE)
(74) Vertreter: Engelhardt & Engelhardt

(57) **Zusammenfassung**

Ein formstabiles Mischfaser-Flächengebilde (1) soll an bestimmten Positionen versteift werden, um erhöhte Belastungen aufnehmen zu können, ohne dass das Flächengebilde (1) in diesen Belastungsbereichen beschädigt oder zerstört ist

Diese Aufgabe ist dadurch gelöst, dass das Flächengebilde (1) aus mindestens einem Thermoplast-Werkstoff (2) und aus mindestens einem Faser-Werkstoff (3), beispielsweise Glasfasern, textile Gewebe, einem Gemisch aus verschiedenartigen Fasergeweben oder dgl. besteht und dass zwischen den einzelnen Fasern (3) des Flächengebildes (1) ein Harz (11) als Bindemittel zur Versteifung der Fasern (3) des Flächengebildes (1) vorhanden ist.

## Beschreibung

Die Erfindung bezieht sich auf ein Verfahren zur Herstellung eines Mischfaser-Flächengebildes nach dem Oberbegriff des Patentanspruches 1 sowie auf ein Flächengebilde nach dem Oberbegriff des Patentanspruches 8.

Solche Flächengebilde werden oftmals für den Fahrzeugbau zur Auskleidung eines Innenraumes eines Fahrzeuges oder als Abdeckung von KFZ-Bauteilen, beispielsweise Bremsen, verwendet. Diese Flächengebilde werden mittels Umformwerkzeugen in eine Sandwich-Struktur durch mechanische und thermische Umformprozesse verformt.

Diese Flächengebilde aus Thermoplast-Werkstoffen und Faser-Werkstoffen sind zwar nach der Umformung formstabil, jedoch können nachteiligerweise durch erhöhte Krafteinflüsse, die beispielsweise durch die Anströmung bei hohen Fahrgeschwindigkeiten entstehen, beschädigt werden. Darüber hinaus sind diese Flächengebildet als Abdeckung an dem Fahrzeugrahmen zu verschrauben oder anderweitig zu befestigen und im Bereich der Befestigungen sind Belastungskräfte aufzunehmen und abzustützen.

Es ist daher Aufgabe der Erfindung ein Verfahren zur Herstellung eines Flächengebildes der eingangs genannten Gattung sowie ein Flächengebilde der eingangs genannten Gattung zur Verfügung zu stellen, das an bestimmten Positionen des Flächengebildes versteift ist, um erhöhte Belastungen aufnehmen zu können, ohne dass das Flächengebilde in diesen Belastungsbereichen beschädigt oder zerstört ist.

Diese Aufgabe ist erfindungsgemäß durch die Merkmale der kennzeichnenden Teile von Patentanspruch 1 und 8 gelöst.

Weitere vorteilhafte Weiterbildungen der Erfindung ergeben sich aus den Unteransprüchen.

Mit Hilfe des erfindungsgemäßen Verfahrens kann demnach ein Flächengebilde in Leichtbauausführung mit einer erhöhten Steifigkeit, insbesondere im Fahrzeugbau verwendet werden, wodurch die besonderen Belastung ausgesetzten Teilbereiche des Flächengebildes versteift sind, um höhere Belastungskräfte abstützen und aufnehmen zu können.

Solche Flächengebilde können besonders vorteilhafterweise zunächst in einer beliebigen Anzahl hergestellt und zwischengelagert sein, um anschließend bedarfsgerecht die Flächengebilde mit dem Harz als Bindemittel zu tränken. Zudem sind die Flächengebilde kostengünstig herstellbar und die versteiften Bereiche des Flächengebildes sind beliebig mit Harz versteifbar.

Die Durchtränkung des Flächengebildes mit Harz hängt zum einen von der Innenstruktur des Flächengebildes und zum anderen von der Viskosität des verwendeten Harzes ab. Um zu gewährleisten, dass das Harz über die gesamte Wandstärke des Flächengebildes gelangt, ohne vorher auszutrocknen und somit die Durchdringungstiefe gleichmäßig zu erzeugen, ist einerseits ein Anlagewerkzeug vorgesehen, durch das das Flächengebilde abgestützt ist, um einen bestimmten Auftragsdruck, der von einem Auftragswerkzeug erzeugt ist, abzustützen und andererseits ein Unterdruck herzustellen, wodurch der Harz in das innere des Flächengebildes eingesaugt ist.

Die Eindringtiefe des Harzes kann durch eine Trennschicht vorgegeben sein, deren Porengrößen kleiner bemessen sind, als die Partikelgröße des Harzes, so dass die Trennschicht als Sperre für das Harz dient.

Das in das Flächengebilde eingedrungene Harz umfließt die Fasern und versteift diese nach dem Aushärten in drei Richtungen, nämlich in die X-, Y- und Z-Richtung, so dass ein dreidimensionaler Verbund von Fasern mit dem Thermoplast-Werkstoff geschaffen ist.

In der Zeichnung ist ein Ausführungsbeispiel eines erfindungsgemäßen Flächengebildes in unterschiedlichsten geometrischen Ausgestaltungen dargestellt, das nachfolgend näher erläutert ist.

Im Einzelnen zeigt:

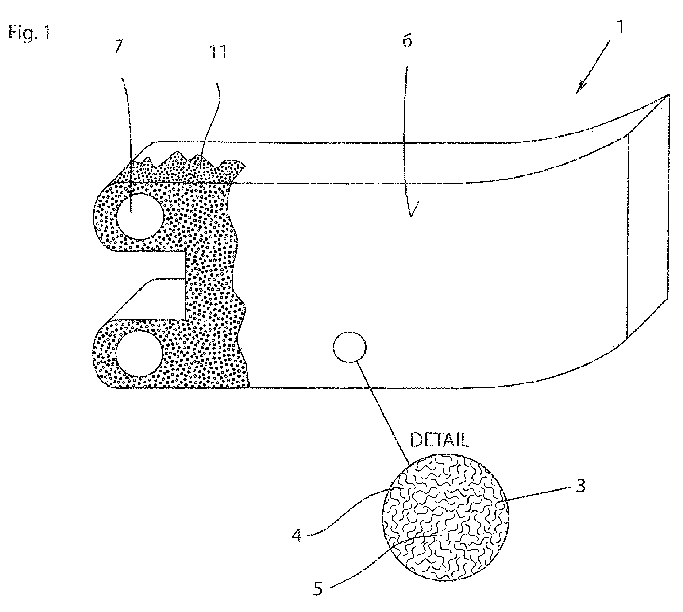

- Figur 1: ein Flächengebilde in einer ersten Ausführungsvariante, bestehend aus einem Thermoplast-Werkstoff und einem Faser-Werkstoff, in das zwei Durchgangsbohrungen eingearbeitet sind, in deren Bereich ein Harz als Bindemittel in das Innere des Flächengebildes eingebracht ist, in perspektivischer Ansicht,

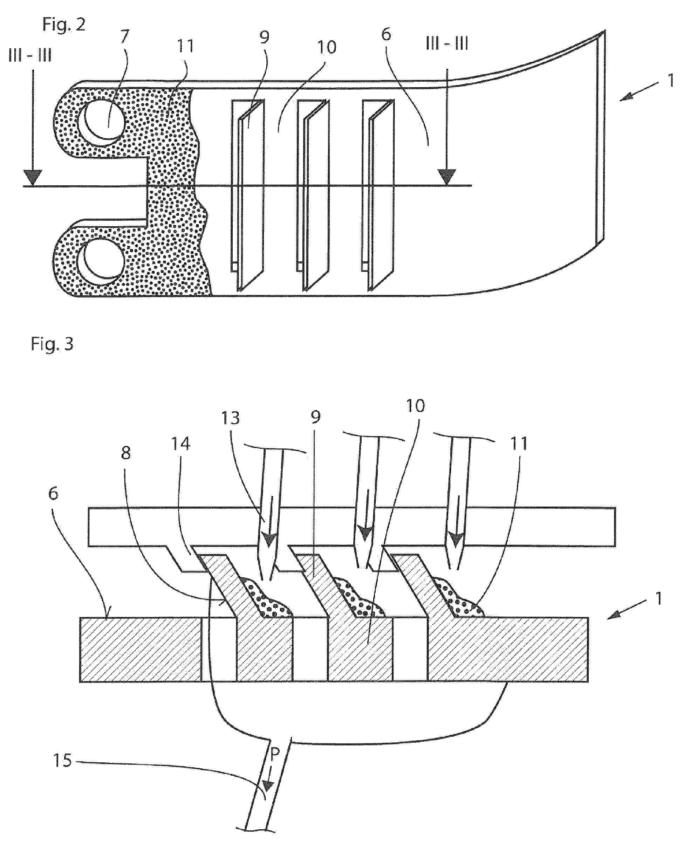

- Figur 2: das Flächengebilde in einer zweiten Ausführungsvariante, bestehend aus einem Thermoplast-Werkstoff und einem Faser-Werkstoff, in die zwei Bohrungen und drei Belüftungsschlitze eingearbeitet sind, die jeweils mit einem Harz als Bindemittel versteift sind, in perspektivischer Ansicht,
- Figur 3: das Flächengebilde gemäß Figur 2, entlang der Schnittlinie III-III,

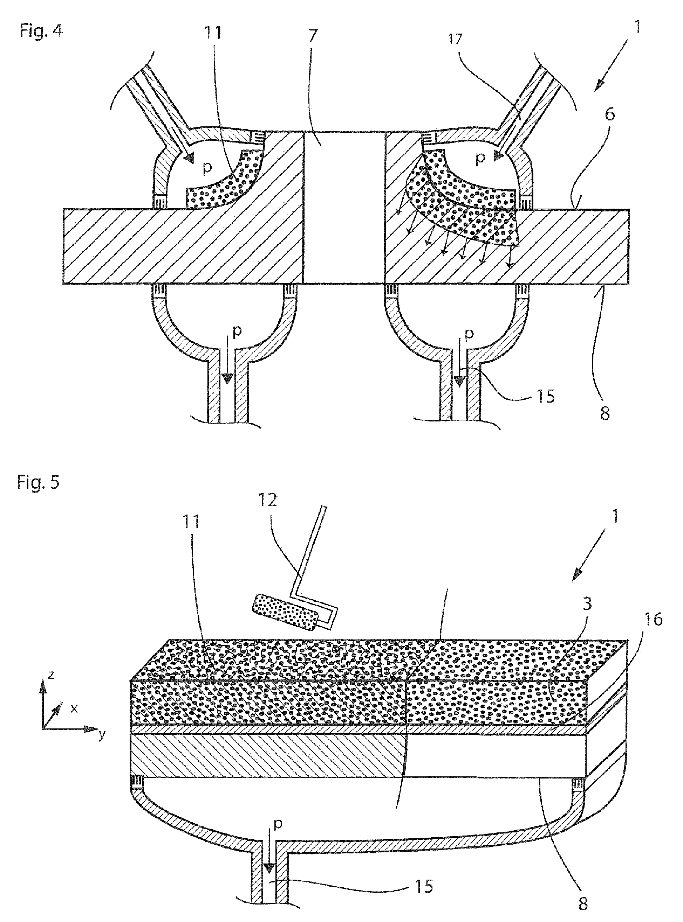

- Figur 4: ein Flächengebilde gemäß Figur 1 oder 2, auf dessen einer Oberfläche eine Sprüheinrichtung das Harz bereichsweise auf die Oberfläche des Flächengebildes aufgetragen ist und eine an der gegenüberliegenden Unterseite des Flächengebildes angeordnetes Auflagewerk zeug, durch das ein Unterdruck zur Einsaugung des Harzes in das Innere des Flächengebildes vorgesehen ist, im Schnitt und
- Figur 5: das Flächengebilde gemäß Figur 4, auf dessen Oberfläche mittels einer Rolle das Harz aufgetragen ist und einer auf der gegenüberliegendenUnterseite angeordneten Auflagewerkzeug, durch das das Harz mittels Unterdruck in das Innere des Flächengebildes bis zu einer Trennschicht eingesaugt ist.

Figur 1 ist beispielhaft eine konstruktive Ausgestaltung eines Flächengebildes 1 zu entnehmen, das aus einem Thermoplast-Werkstoff 2 und einem Faser-Werkstoff 3, beispielweise einem textilem Gewebe, Glasfasern oder einem Gemisch aus verschiedenartigen Faser-Werkstoffen 3, hergestellt ist. Die verwendeten Werkstoffpaarungen führen dazu, dass auf der Oberfläche 6 und der dazu gegenüberliegenden Unterseite 8 des Flächengebildes 1 mehrere Lufteinlässe 4 und im Inneren des Flächengebildes 1 mehrere Luftdurchlässe 5 vorhanden sind, die porenfömrig ausgestaltet sind.

In das Flächengebilde 1 sind zwei Durchgangsbohrungen 7 eingearbeitet, so dass das Flächengebilde 1, beispielsweise an einer Karosserie eines Fahrzeuges, als Abdeckung angebracht werden kann. In dem Bereich der Durchgangsbohrungen 7 entstehen aufgrund der Befestigung erhöhte Belastungskräfte, so dass dieser Bereich versteift werden soll. Die Versteifung der Durchgangsöffnungen 7 erfolgt mittels eines Harzes 11, das als Bindemittel zwischen den Faser-Werkstoffen 3 und dem Thermoplast-Werkstoff 2 nach dem Aushärten des Harzes 11 wirkt.

Nachdem das Harz 11 auf die Oberfläche 6 des Flächengebildes 1 aufgebracht ist, dringt dieses aufgrund seiner Viskosität - bzw. des Fließverhaltens des Harzes 11 - und der vorherrschenden Schwerkraft, in das Innere des Flächengebildes 1 ein. Die Eindringtiefe des Harzes 11 kann dabei durch die Auftragsmenge des Harzes 11, seiner Viskosität oder durch einen Auftragsdruck und/oder Unterdruck eingestellt werden.

Den Figuren 2 und 3 ist eine geringfügig andersartige Ausführungsvariante eines Flächengebildes 1 zu entnehmen, indem zusätzlich drei Belüftungsschlitze 9, die jeweils mit einer als Luftführungskanal dienenden Rippe 10 versehen sind. Da die derart ausgestalteten Flächengebilde 1 als Abdeckung an Bremsen für Fahrzeuge verwendet werden können und solche Fahrzeuge oftmals hohe Geschwindigkeiten fahren, entstehen an den Rippen, die von dem Flächengebilde 1 abstehen, erhöhte Belastungskräfte, die durch die Luftanströmungen erzeugt sind. Demnach sollen auch die Rippen 10 mittels eines Harzes 11 als Bindemittel ausgesteift werden.

Das Auftragen des Harzes 11 erfolgt mittels einer Sprüheinrichtung 13, die schematisch dargestellt ist. Um die von dem Flächengebilde 1 abstehenden Rippen 10 zu stützen und ein Durchbiegen des Flächengebildes 1 bzw. der Rippen 10 zu verhindern, ist auf der Oberfläche 6 gegenüberliegenden Unterseite 8 des Flächengebildes ein Auflagewerkzeug 14 vorgesehen, das als Gegenlager dient. Gleichzeitig erzeugt das Auflagewerkzeug 14 ein Unterdruck 15, der eine Sogwirkung auf das aufgetragene Harz 11 ausübt. Der derart erzeugte Unterdruck 15 zieht demnach das aufgesprühte Harz durch die Lufteinlässe 4 in die Luftdurchlässe 5 des Flächengebildes 1.

Insbesondere der Figur 4 ist zu entnehmen, dass das Harz 11 lediglich bereichsweise in das Flächengebilde eingebracht werden kann. Hierzu kann der Unterdruck 15 bereichsweise auf das Flächengebilde 1 bzw. auf das aufgetragene Harz 11 ausgeübt werden, so dass lediglich in dem Bereich der Durchgangsöffnungen 7 und der Rippen 10, das Harz 11 in das Innere des Flächengebildes 1 eingesaugt ist. Ein Überdruck 17 kann dabei das Eindringen des Harzes 11 begünstigen.

Nach dem Aushärten des Harzes 11 entsteht demnach eine formschlüssige Verbindung zwischen dem Thermoplast-Werkstoff 2 sowie den einzelnen Faser-Werkstoffen 3 des Flächengebildes 1, wodurch das Flächengebilde 1 in den Bereichen, in denen das Harz 11 vorhanden ist, eine höhere Steifigkeit und Festigkeit aufweist.

Aus den Figuren 4+5 ist ersichtlich, dass das Harz 11 mittels einer Rolle 12 auf die Oberfläche 6 des Flächengebildes 1 aufgedrückt werden kann und dass das Auflagewerkzeug 14 fluchtend unterhalb der Auftragsfläche der Rolle 12 angeordnet ist, um das Flächengebilde 1 abzustützen und gleichzeitig den Unterdruck 15 zur Einsaugung des Harzes 11 auszuüben.

Die Durchdringung des Flächengebildes 1 kann mit dem aufgetragenen Harz 11 durch eine Trennschicht 16 gesperrt sein. Die Trennschicht 16 ist dabei im Inneren des Flächengebildes 1 angeordnet und erstreckt sich über dessen gesamte Fläche gemäß Figur 5. Die Porengröße der Trennschicht 16 ist dabei kleiner bemessen als die Partikelgröße oder Tropfgröße des Harzes 11, so dass dieses von der Trennschicht 16 beim Ausüben des Unterdruckes 15 gestoppt ist. Somit kann durch die Anordnung der Trennschicht 16 exakt die Wandstärke vorgegeben sein, die mit dem Harz 11 getränkt bzw. durchdrungen sein soll.

Die Porengröße der Trennschicht 16 ist allerdings luftdurchlässig, so dass der Einfluss des Unterdruckes 15 auf das Harz 11 ungehindert ausgeübt ist.

Die Trennschicht 16 kann darüber hinaus auch bereichsweise in dem Flächengebilde 1 angeordnet sein, um gezielt die mechanischen Eigenschaften des Flächengebildes 1 einzustellen und im Sinne des Leichtbaus optimale mechanische Eigenschaften bei geringem Gewicht zu erzielen. Hierzu kann auch die Trennschicht 16 auf die Oberfläche 6 aufgebracht werden, um das Eindringen des Harzes 11 zu verhindern. Dadurch können beispielsweise biegeweiche Bereiche oder Bereiche, in denen zu einem späteren Zeitpunkt ein thermoplastischer Umformvorgang vorgenommen werden kann, geschaffen werden.
Es ist denkbar, ein erfindungsgemäßes Flächengebilde 1 mit mehreren solchen Flächengebilden 1 zu einem Sandwich-Bauteil zu verbinden, zwischen denen beispielsweise ein Schaumstoff oder ein sonstiges leicht bauendes Werkstoffteil eingeschlossen ist.

## Patentansprüche

1. Verfahren zur Herstellung eines formstabilen Mischfaser-Flächengebildes (1), das aus mindestens einem Thermoplast-Werkstoff (2) und mindestens einem Faser-Werkstoff (3), beispielsweise Glasfasern, textile Gewebe, einem Gemisch aus verschiedenartigen Fasergeweben oder dgl. besteht, wobei durch den Faser-Werkstoff (3) mehrere Luft-Einlässe (4) und -Durchlässe (5) in dem Flächengebilde (1) geschaffen sind, **gekennzeichnet durch** die nachfolgenden Verfahrensschritte:
- Auftragen eines Harzes (11) auf mindestens eine der Oberflächen (6) des Flächengebildes (1),
- Eindringen des Harzes (11) **durch** die Luft-Einlässe (4) in die Luft-Durchlässe (5) in das Innere des Flächengebildes (1),
- Umfließen der Fasern (3) des Flächengebildes (1) **durch** das Harz (11) und
- Aushärten des Harzes (11) und Erzeugen eines Verbundes zwischen Fasern (3) und dem Harz (11) als Bindemittel für diese.

2. Verfahren nach Anspruch 1,
**dadurch gekennzeichnet,**
**dass** das Harz (11) mittels einer Rolle (12), eines Tampons oder einer Sprüheinrichtung (13) auf das Flächengebilde (1) ganz oder bereichsweise aufgetragen ist.

3. Verfahren nach Anspruch 1 oder 2,
**dadurch gekennzeichnet,**
**dass** im Bereich des Harzauftrages unterhalb der Auftrag-Oberfläche ein als Gegenlager wirkendes Auflagewerkzeug (14) vorgesehen ist, durch dass das Flächengebilde während des Auftragvorganges abgestützt ist.

4. Verfahren nach Anspruch 3,
**dadurch gekennzeichnet,**
**dass** ein Unterdruck (15) gebildet ist, durch den das auf die gegenüberliegende Oberfläche des Flächengebildes (1) aufgetragene Harz (11) einwirkt und dass durch den Unterdruck (15) das Harz (11) in das Innere des Flächengebildes (1) eingesaugt ist.

5. Verfahren nach Anspruch 3,
**dadurch gekennzeichnet,**
**dass** ein Überdruck (17) gebildet ist, der auf das auf der Oberfläche (6) des Flächengebildes (1) aufgetragene Harz (11) einwirkt und dass durch den Überdruck (17) das Harz (11) in das Innere des Flächengebildes (1) gedrückt ist.

6. Verfahren nach einem der vorgenannten Ansprüche,
**dadurch gekennzeichnet,**
**dass** im Inneren des Flächengebildes (1) eine Trennschicht (16) eingesetzt ist und dass die Poren der Trennschicht (16) kleiner bemessen sind als die Partikelgröße des Harzes (11) und dass durch die Trennschicht (14) das Harz (11) in seinem Fließverhalten aufgehalten ist.

7. Verfahren nach einem der vorgenannten Ansprüche,
**dadurch gekennzeichnet,**
**dass** das Flächengebilde (1) aus mehreren Schichten aufgebaut ist, und dass die Schichten in Sandwich-Leichtbau-Ausführung miteinander verbunden sind.

8. Formstabiles Mischfaser-Flächengebilde (1), das nach einem der vorgenannten Ansprüche hergestellt ist,
**dadurch gekennzeichnet,**
**dass** das Flächengebilde (1) aus mindestens einem Thermoplast-Werkstoff (2) und aus mindestens einem Faser-Werkstoff (3), beispielsweise Glasfasern, textile Gewebe, einem Gemisch aus verschiedenartigen Fasergeweben oder dgl. besteht und dass zwischen den einzelnen Fasern (3) des Flächengebildes (1) ein Harz (11) als Bindemittel zur Versteifung der Fasern (3) des Flächengebildes (1) vorhanden ist.

9. Flächengebilde nach Anspruch 8,
**dadurch gekennzeichnet,**
**dass** in dem Flächengebilde (1) eine Trennschicht (16) angeordnet ist, dass die Poren der Trennschicht (16) kleiner bemessen sind als die einzelnen Tropfen des Harzes (11) und dass die Trennschicht als Sperre für das Harz (11) wirkt.
